Europäisches Patentamt

European Patent Office

Office européen des brevets

(11) Veröffentlichungsnummer: **0 421 105 A1**

## (12) EUROPÄISCHE PATENTANMELDUNG

(21) Anmeldenummer: 90116042.4

(22) Anmeldetag: 22.08.90

(51) Int. Cl.5: **A23J 3/34, C07K 3/10**

(30) Priorität: 01.09.89 DE 3929090

(43) Veröffentlichungstag der Anmeldung:
**10.04.91 Patentblatt 91/15**

(84) Benannte Vertragsstaaten:
**AT BE CH DE ES FR GB IT LI NL SE**

(71) Anmelder: **MERCK PATENT GESELLSCHAFT MIT BESCHRÄNKTER HAFTUNG**
**Frankfurter Strasse 250**
**W-6100 Darmstadt(DE)**

(72) Erfinder: **Diermayr, Peter, Dr.**
**Dresdner Ring 34**
**W-6203 Hochheim/Main(DE)**
Erfinder: **Dehne, Lutz, Dr.**
**Siebenbürgenstrasse 5**
**W-6100 Darmstadt(DE)**

(54) **Enzymatische Hydrolyse von Proteinen.**

(57) Die Erfindung betrifft ein Verfahren zur reproduzierbaren Herstellung von definierten Proteinhydrolysaten durch kontinuierliche Zugabe von Säure bei einem konstantgehaltenen pH-Wert im pH-Bereich zwischen 1 und 4.

EP 0 421 105 A1

## ENZYMATISCHE HYDROLYSE VON PROTEINEN

Die Erfindung betrifft ein Verfahren zur Herstellung von Proteinhydrolysaten durch Einsatz von im sauren Bereich wirksamen proteolytischen Enzymen, wobei durch eine gesteuerte Zugabe von Säuren während der Hydrolyse der pH-Wert in einem Bereich zwischen 1 bis 4 auf einem konstanten Wert gehalten wird und somit ein definiertes, reproduzierbares und in seinen Eigenschaften voraussagbares Proteinhydrolysat gebildet wird.

Proteinhydrolysate erlangen auf dem Lebensmittelsektor, insbesondere im diätetischen Bereich und für die Ernährung von Sportlern, zunehmende Bedeutung. Dabei ist es wichtig, daß reproduzierbare Hydrolysate mit günstigen Eigenschaften erhalten werden können. Aus diesem Grund ist die Gewinnung solcher Hydrolysate durch Spaltung von Proteinen mit chemischen Mitteln ungeeignet. Daher wird für derartige Anwendungen bevorzugt mit spezifisch wirksamen Enzymen gearbeitet. Die meisten solcher Enzyme arbeiten vorwiegend im neutralen bis alkalischen Bereich zwischen pH 7 und 10. Für den sauren Bereich stehen bislang nur wenige Enzyme (z.B. Pepsin) zur Verfügung. Aus diesem Grund wurden bisher vorwiegend Verfahren entwickelt, die mit Enzymen bei alkalischem pH arbeiten. Ohne besondere Maßnahmen erhält man jedoch, wie auch bei Arbeiten im sauren Medium, oft nicht reproduzierbare Zusammensetzungen von Hydrolysaten. Durch eine modifizierte Verfahrenstechnik (pH-stat-Technik), bei der während der Hydrolyse Laugen zur Einhaltung eines bestimmten basischen pH-Wertes zugesetzt werden, konnten verbesserte Resultate erzielt werden. Über eine analoge Anwendung dieser Technik im sauren pH-Bereich wurde bislang nicht mit Erfolg berichtet, zudem auch theoretische Überlegungen sich dagegen aussprachen. So ist aus "Enzymic Hydrolysis of Food Proteins" (Jens Adler-Nissen, Elsevier Applied Science Publishers, 1986, S. 11) bekannt, daß die pH-stat-Technik im sauren bis stark sauren pH-Bereich (pH < 3) nicht anwendbar ist, bzw. dadurch keine befriedigenden Ergebnisse zu erhalten sind.

Es bestand somit die Aufgabe, in reproduzierbarer Weise Proteinhydrolysate von definierter Zusammensetzung im stark sauren pH-Bereich zu gewinnen.

Überraschend wurde nun gefunden, daß bei Einsatz der eigentlich für den alkalischen Bereich entwickelten und durch das erfindungsgemäße Verfahren entsprechend adaptierten pH-stat-Technik auch im stark sauren pH-Bereich durch kontrollierte Zugabe von Säure Proteinhydrolysate von definierter und gleichbleibender Zusammensetzung und mit vorteilhaften Eigenschaften erhalten werden können. Da der erfindungsgemäße pH-Bereich dem Säuregehalt des Magens entspricht, kann bei der Hydrolyse, insbesondere bei Einsatz von Pepsin, unter quasi-physiologischen Bedingungen gearbeitet werden.

Gegenstand der Erfindung ist somit ein Verfahren zur Herstellung definierter Proteinhydrolysate durch enzymatische Hydrolyse von Proteinen, dadurch gekennzeichnet, daß die Reaktion durch gesteuerte Zugabe von Säure während der Hydrolyse bei einem konstant gehaltenen pH-Wert zwischen 1 bis 4 durchgeführt wird.

Gegenstand der Erfindung ist insbesondere ein Verfahren, daß dadurch gekennzeichnet ist, daß die Hydrolyse bei einem konstant gehaltenen pH-Wert zwischen 2 und 3 durchgeführt wird.

Nach dem erfindungsgemäßen Verfahren wird zunächst eine vorzugsweise wäßrige Lösung oder Suspension des zu hydrolysierenden Proteins oder Proteingemisches hergestellt, wobei eine Proteinkonzentration von 1 bis 30 %, vorzugsweise von 5-15 % vorgelegt wird. Die Art des Proteins spielt hierbei keine maßgebliche Rolle. So können beispielsweise Getreideproteine wie Weizenkleber, Sojaproteine, Milchproteine wie Casein oder Proteine aus Fleisch, Fisch, Eiern oder Serum eingesetzt werden. Die Lösung wird nun mit einer Säure auf einen bestimmten pH-Wert in einem Bereich zwischen pH 1 und 4, vorzugsweise zwischen pH 2 und 3 eingestellt. Als Säuren eignen sich prinzipiell alle starken bis mittelstarken nicht oxidierenden anorganischen oder organischen Säuren oder Säuregemische, so beispielsweise Salzsäure, Schwefelsäure, Phosphorsäure oder Essigsäure. Die Wahl der Säure kann auch von der nach Beendigung der Hydrolyse entstandenen erwünschten oder unerwünschten Salzkonzentration abhängig gemacht werden. So kann beispielsweise bei Einsatz von Phosphorsäure die Phosphatkonzentration im Hydrolysat durch Ausfällung als schwerlösliche Salze erniedrigt werden.

Die Lösung wird anschließend auf eine Temperatur von 10 bis 70 °C, vorzugsweise 30 bis 45 °C, eingestellt. Die Hydrolyse wird daraufhin durch Zugabe eines proteolytischen Enzyms gestartet. Dabei eignen sich alle Enzyme, deren pH-Optimum im sauren pH-Bereich liegt, so beispielsweise Pepsin oder saure Proteinasen aus Aspergillus. Entspre chende Enzyme sind im Handel erhältlich. Vorzugsweise variiert die Menge an Enzym zwischen 0,1 und 2 %, vorzugsweise zwischen 0,3 und 1 %, bezogen auf die Menge an eingesetztem Protein. Durch die einsetzende Hydrolyse werden ständig Protonen verbraucht. Diese werden durch synchrones Zutitrieren von Säure bekannter Konzentration wieder nachgeliefert, so daß der ursprünglich eingestellte pH-Wert sich nicht verändert. Die Kontrolle des so konstant gehaltenen pH-Wertes erfolgt vorzugsweise mit einem pH-Meter. Besonders vorteilhaft ist der Einsatz von vollautomatischen Apparaturen, bestehend beispielsweise aus einer pH-Elektrode, automatischer Bürette und einem Steuergerät. Als zuzutitrierende Säure wird vorzugsweise die gleiche Säure gleicher oder unterschiedlicher Konzentration eingesetzt, die für die anfängliche pH-Wert-Einstellung verwendet wurde. Selbstverständlich kann auch eine andere Säure eingesetzt werden. Die Hydrolysereaktion wird nach 1 bis 5 h, vorzugsweise nach 2 bis 3 h, beendet. Dies geschieht beispielsweise durch Erhitzen und/oder durch zugabe von Lauge bis zum Neutralpunkt (pH 7). Vorzugsweise wird die Reaktion durch Neutralisierung und anschließende Erhitzung auf 80-90 °C 20 bis 60 Minuten lang gestoppt. Die Gewinnung des löslichen Proteinhydrolysates erfolgt anschließend in bekannter Weise, z. B. durch Filtration oder Zentrifugation der unlöslichen bzw. ausgefallenen Bestandteile und anschließende Sprüh- oder Gefriertrocknung des Filtrats bzw. des Überstandes.

Mit Hilfe des erfindungsgemäßen Verfahrens läßt sich so je nach Dauer der Hydrolysereaktion ein ganz bestimmter reproduzierbarer Hydrolysegrad einstellen. Ein bestimmter Hydrolysegrad entspricht wiederum einem Proteinhydrolysat mit definierter Zusammensetzung und oft voraussagbaren Eigenschaften. So können über den Hydrolysegrad Aussagen beispielsweise über Geschmack bzw. Bitterkeit sowie über das Emulsions- und das Schäumungsverhalten gemacht werden. Die Ausbeute an löslichem Hydrolysat, hergestellt nach dem erfindungsgemäßen Verfahren, ist erheblich höher, verglichen mit den Ausbeuten, die nach dem bekannten pH-stat-Verfahren im alkalischen Bereich gewonnen werden. So können Ausbeutesteigerungen bis über 100 % gegenüber dem Stand der Technik erzielt werden. Die Hydrolysate nach dem erfindungsgemäßen Verfahren sind ausgezeichnet wasserlöslich und eignen sich daher in besonderem Maße für Getränke. Auch qualitativ unterscheiden sie sich von den alkalisch hergestellten Hydrolysaten. So weisen sie einen wesentlich höheren Anteil an niedermolekularen Bestandteilen auf und sind somit ernährungsphysiologisch von besonderem Interesse.

Beispiel 1:

5 kg Weizenkleber (Proteingehalt 75 %) werden in 50 l Wasser suspendiert und unter Rühren auf 40 °C erwärmt. Nun wird mit 32 %iger HCl auf pH 2,0 eingestellt. Die Enzymreaktion wird durch Zugabe von 15 g Newlase A (Proteinase aus Aspergillus, Fa. Amano, Japan) gestartet. Mittels einer pH-stat-Apparatur bestehend aus pH-Elektrode, automatischer Bürette und einem Steuergerät, wird der pH-Wert durch kontinuierliche Zudosierung von 25%iger HCl konstant gehalten. Nach 2 1/2 Stunden wird die Reaktion durch Zugabe von 32 %iger NaOH bis pH 7,0 und anschließendes Erhitzen der Lösung ca. 30 Minuten lang auf ca. 80 °C gestoppt. Die Abtrennung ungelöster Bestandteile erfolgt durch Zentrifugation. Der klare Überstand wird schließlich sprühgetrocknet. Man erhält 3,6 kg eines leicht gelben, pulverförmigen, nahezu geschmacksneutralen Proteinhydrolysats (Proteingehalt: 75 %) mit einem Hydrolysegrad von 6,83 % (Verbrauch an 25%iger HCl bis zum Abbruch: 244 ml). Der Hydrolysegrad berechnet sich nach "Enzymic Hydrolysis of Food Proteins" (Jens Adler-Nissen, Elsevier Applied Science Publishers, 1986, S. 132) folgendermaßen:

$$DH \ \% = \frac{V \cdot N}{E} \cdot \frac{1}{\alpha} \cdot \frac{1}{h} \cdot 100 \ \%, \ \text{wobei}$$

V: Verbrauch an Säure in l
N: Normalität der Säure
E: Einwaage an Reinprotein in kg
$\alpha$: Dissoziationsgrad der Carboxylfunktion der freigesetzten Aminosäuren/Peptide
h: Zahl der Peptidbindungen in mol pro kg Protein (näherungsweise 8)

$$DH \ \% = \frac{0,244 \cdot 7,78}{5 \cdot 0,75} \cdot 1,08 \cdot 0,125 \cdot 100 \ \% = 6,83 \ \%$$

Beispiel 2

Analog Beispiel 1 werden 500 g Sojaproteinkonzentrat (Proteingehalt: 90 %) in etwa 5 l Wasser bei einem pH-Wert von 1,5 und einer Temperatur von 40 °C mit 2 g Rinderpepsin 2 h lang hydrolysiert. Man erhält 310 g Hydrolysat (Proteingehalt: 90 %) mit einem Hydrolysegrad von 6,68 %.

$$DH \% = \frac{0,030 \cdot 7,78}{0,5 \cdot 0,9} \cdot 1,03 \cdot 0,125 \cdot 100 \% = 6,68 \%$$

Beispiel 3

Analog Beispiel 1 werden 5 kg Weizenkleber (Proteingehalt: 75 %) bei einem pH-Wert von 3,0 und einer Temperatur von 40 °C mit 15 g Newlase A 3,0 h lang hydrolysiert. Die Aufrechterhaltung des pH-Wertes erfolgt mit 23%ige $H_3PO_4$. Man erhält 3,5 kg Hydrolysat (Proteingehalt: 75 %) mit einem Hydrolysegrad von 7,2 %.

$$DH \% = \frac{0,300 \cdot 4}{5 \cdot 0,75} \cdot 1,80 \cdot 0,125 \cdot 100 \% = 7,2 \%$$

**Ansprüche**

1. Verfahren zur Herstellung definierter Proteinhydrolysate durch enzymatische Hydrolyse von Proteinen, dadurch gekennzeichnet, daß die Reaktion durch gesteuerte zugabe von Säure während der Hydrolyse bei einem konstant gehaltenen pH-Wert zwischen 1 bis 4 durchgeführt wird.

2. Verfahren nach Anspruch 1, dadurch gekennzeichnet, daß die Hydrolyse bei einem konstant gehaltenen pH-Wert zwischen 2 und 3 durchgeführt wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | GB-A-2 053 228 (NOVO INDUSTRI A/S) <br> * Insgesamt * <br> – – – | 1 | A 23 J 3/34 <br> C 07 K 3/10 |
| D,X | "Enzymic Hydrolysis of Good Proteins", pages 9-24, Jens Adler-Nisser, Elsevier Applied Science Publishers <br> * Insgesamt * <br> – – – – – | 1 | |

|  |  |
|---|---|
| | **RECHERCHIERTE SACHGEBIETE (Int. Cl.5)** |
| | A 23 J <br> C 07 K |

Der vorliegende Recherchenbericht wurde für alle Patentansprüche erstellt

| Recherchenort | Abschlußdatum der Recherche | Prüfer |
|---|---|---|
| Den Haag | 28 November 90 | NOVOA Y SANJURJO M.A |